**Europäisches Patentamt**

**European Patent Office**

**Office européen des brevets**

(19)

(11) Veröffentlichungsnummer : **0 426 882 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **G01D 5/36**

(21) Anmeldenummer : **89120435.6**

(22) Anmeldetag : **04.11.89**

---

(54) **Lichtelektrische Positionsmesseinrichtung.**

(43) Veröffentlichungstag der Anmeldung :
**15.05.91 Patentblatt 91/20**

(45) Bekanntmachung des Hinweises auf die
Patenterteilung :
**12.08.92 Patentblatt 92/33**

(84) Benannte Vertragsstaaten :
**DE FR GB IT**

(56) Entgegenhaltungen :
**DE-C- 3 334 400**

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Affa, Alfred
Hochfellnstrasse 6
W-8221 Stein/Traun (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine lichtelektrische Positionsmeßeinrichtung gemäß dem Oberbegriff des Anspruches 1.

Eine derartige Positionsmeßeinrichtung wird insbesondere bei Bearbeitungsmaschinen zum Messen der Relativlage eines Werkzeugs bezüglich eines zu bearbeitenden Werkstücks eingesetzt.

Aus der DE-PS 33 34 400 ist eine lichtelektrische Positionsmeßeinrichtung zum Messen der Relativlage zweier Objekte bekannt, bei der die Meßteilung eines mit dem einen Objekt verbundenen Teilungsträgers von einer mit dem anderen Objekt verbundenen Abtasteinheit abgetastet wird, die eine Beleuchtungseinheit, eine Abtastplatte mit einer Abtastteilung sowie zwei Photoelemente aufweist. Während die Meßteilung aus lichtdurchlässigen Streifen und lichtreflektierenden Streifen besteht, weist die Abtastteilung lichtdurchlässige Streifen und lichtundurchlässige Streifen auf. Das von der Beleuchtungseinheit ausgehende Lichtstrahlenbündel durchsetzt die lichtdurchlässigen Streifen der Abtastteilung und anschließend die lichtdurchlässigen Streifen der Meßteilung und fällt als durchgehendes Teilstrahlenbündel im Durchlicht auf das erste Photoelement. Das von den lichtreflektierenden Streifen der Meßteilung reflektierte Teilstrahlenbündel durchsetzt die lichtdurchlässigen Streifen der Abtastteilung und fällt im Auflicht auf das zweite Photoelement. Bei der Relativbewegung der Abtasteinheit bezüglich der Meßteilung werden das durchgehende Teilstrahlenbündel und das reflektierte Teilstrahlenbündel von der Abtastteilung moduliert, so daß die beiden Photoelemente zwei zueinander gegenphasige periodische Abtastsignale erzeugen, die zur Eliminierung ihrer Gleichspannungsanteile einander zur Erzeugung eines nullsymmetrischen Signals überlagert werden, aus dem die Meßwerte für die Relativlage der beiden Objekte gewonnen werden.

Der Erfindung liegt die Aufgabe zugrunde, bei einer lichtelektrischen Positionsmeßeinrichtung der genannten Gattung das an der Meßteilung reflektierte Teilstrahlenbündel zur Erzeugung spezieller Funktionssignale auszubilden.

Diese Aufgabe wird erfindungsgemäß durch die Merkmale des Anspruchs 1 gelöst.

Die mit der Erfindung erzielten Vorteile bestehen insbesondere darin, daß das von der Meßteilung reflektierte Teilstrahlenbündel durch seine unmodulierte Ausbildung die Erzeugung spezieller Funktionssignale für die verschiedensten Anwendungszwecke erlaubt. Durch die erhebliche Reduzierung der Breite des von der Beleuchtungseinheit ausgehenden Lichtstrahlenbündels kann beschränkten Einbauverhältnissen Rechnung getragen werden.

Vorteilhafte Ausbildungen entnimmt man den Unteransprüchen.

Ausführungsbeispiele der Erfindung werden anhand der Zeichnung näher erläutert.

Es zeigen

Figur 1   eine erste lichtelektrische Längenmeßeinrichtung im Querschnitt und
Figur 2   eine Draufsicht auf einen ersten Teilungsträger;
Figur 3   eine zweite lichtelektrische Längenmeßeinrichtung im Querschnitt und
Figur 4   eine Draufsicht auf einen zweiten Teilungsträger;
Figur 5   eine dritte lichtelektrische Längenmeßeinrichtung im Querschnitt und
Figur 6   eine Draufsicht auf einen dritten Teilungsträger.

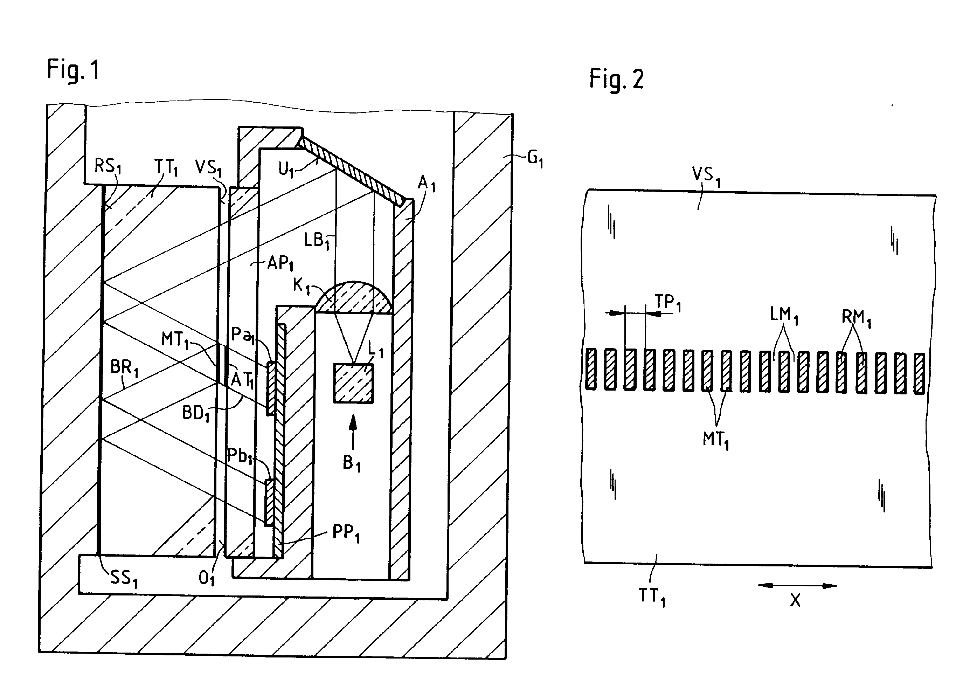

In Figur 1 ist eine erste lichtelektrische Längenmeßeinrichtung im Querschnitt dargestellt, deren Gehäuse $G_1$ in Form eines Hohlprofils an einem nicht gezeigten ersten Objekt befestigt ist. Im Inneren des Gehäuses $G_1$ ist ein erster transparenter Teilungsträger $TT_1$ durch Kleben befestigt, der von einer Abtasteinheit $A_1$ abgetastet wird, die in bekannter Weise mit einem nicht gezeigten zweiten Objekt verbunden ist. Beispielsweise sind das erste Objekt durch einen Schlitten und das zweite Objekt durch das Bett einer nicht dargestellten Bearbeitungsmaschine gebildet.

In Figur 2 ist eine Draufsicht auf den ersten transparenten Teilungsträger $TT_1$ gezeigt, der auf seiner der Abtasteinheit $A_1$ zugewandten Vorderseite $VS_1$ eine inkrementale Meßteilung $MT_1$ mit einer Teilungsperiode $TP_1$ aufweist, die aus lichtdurchlässigen Streifen $LM_1$ und aus lichtreflektierenden Streifen $RM_1$ besteht, die in Meßrichtung X alternierend aufeinander folgen; die der Abtasteinheit $A_1$ abgewandte Rückseite $RS_1$ des Teilungsträgers $TT_1$ ist mit einer Spiegelschicht $SS_1$ versehen.

Die Abtasteinheit $A_1$ weist eine Beleuchtungseinheit $B_1$ mit einer Lampe $L_1$ und einem Kondensor $K_1$, eine transparente Abtastplatte $AP_1$ sowie eine Photoelementenplatine $PP_1$ mit zwei Photoelementen $Pa_1$, $Pb_1$ auf. Auf der der Vorderseite $VS_1$ des Teilungsträgers $TT_1$ zugewandten Oberfläche $O_1$ der Abtastplatte $AP_1$ ist eine Abtastteilung $AT_1$ aufgebracht, die aus lichtdurchlässigen Streifen und aus lichtundurchlässigen nichtreflektierenden Streifen besteht und die gleiche Teilungsperiode $TP_1$ wie die Meßteilung $MT_1$ besitzt.

Das von der Beleuchtungseinheit $B_1$ ausgehende Lichtstrahlenbündel $LB_1$ wird von einem Spiegel $U_1$ re-

flektiert, fällt durch die transparente Abtastplatte $AP_1$ außerhalb der Abtastteilung $AT_1$ und durch den transparenten Teilungsträger $TT_1$ außerhalb der Meßteilung $MT_1$ auf die Spiegelschicht $SS_1$ und wird nach der Reflexion in ein durch die lichtdurchlässigen Streifen $LM_1$ der Meßteilung $MT_1$ und durch die lichtdurchlässigen Streifen der Abtastteilung $AT_1$ durchgehendes Teilstrahlenbündel $BD_1$ und in ein von den lichtreflektierenden Streifen $RM_1$ der Meßteilung $MT_1$ reflektiertes Teilstrahlenbündel $BR_1$ aufgespalten.

Das durchgehende Teilstrahlenbündel $BD_1$ beaufschlagt anschließend das erste Photoelement $Pa_1$, während das reflektierte Teilstrahlenbündel $BR_1$ nach der Reflexion an der Spiegelschicht $SS_1$ erneut den Teilungsträger $TT_1$ außerhalb der Meßteilung $MT_1$ und nachfolgend die Abtastplatte $AP_1$ außerhalb der Abtastteilung $AT_1$ durchsetzt und auf das zweite Photoelement $Pb_1$ fällt.

Bei der Meßbewegung der Abtasteinheit $A_1$ bezüglich des Teilungsträgers $TT_1$ wird das durchgehende Teilstrahlenbündel $BD_1$ durch die Relativbewegung zwischen der Meßteilung $MT_1$ und der Abtastteilung $AT_1$ moduliert, so daß das erste Photoelement $Pa_1$ ein periodisches Abtastsignal erzeugt, aus dem in bekannter Weise nach einer Triggerung in einer nicht gezeigten Triggerstufe die Meßwerte für die Relativlage der beiden Objekte gewonnen werden. Demgegenüber ist das reflektierte Teilstrahlenbündel $BR_1$ unmoduliert, so daß das zweite Photoelement $Pb_1$ als Funktionssignal ein Gleichspannungssignal erzeugt, das zur Einstellung der Triggerschwellenspannung der Triggerstufe herangezogen werden kann.

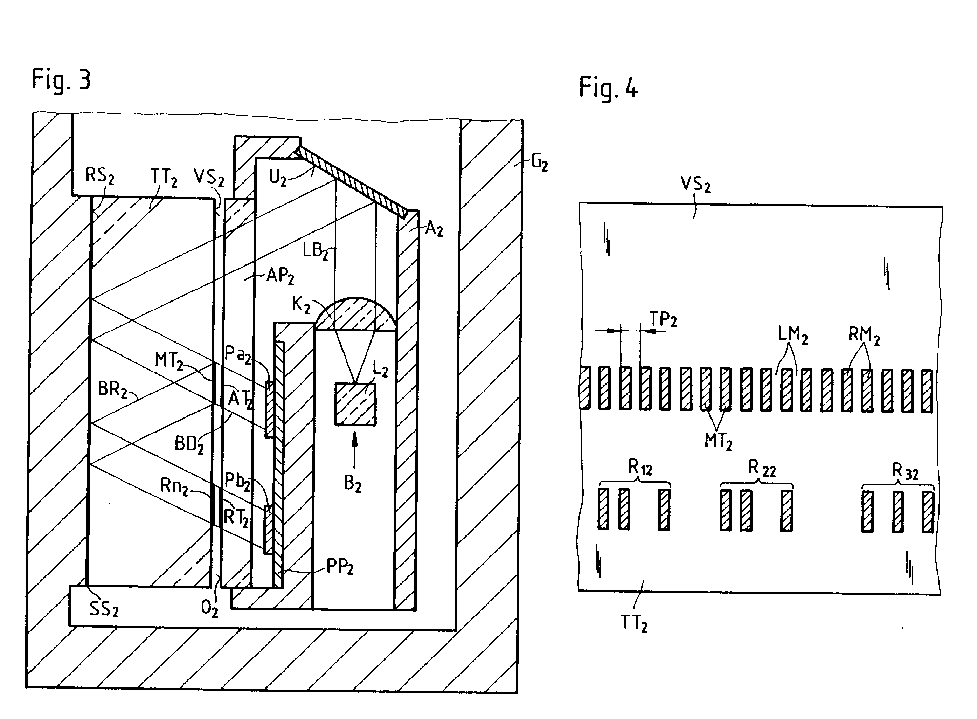

In Figur 3 ist eine zweite lichtelektrische Längenmeßeinrichtung im Querschnitt dargestellt, die im wesentlichen aus den gleichen Elementen wie die erste lichtelektrische Längenmeßeinrichtung gemäß den Figuren 1 und 2 besteht und dementsprechend auch die gleichen Bezugszeichen aufweist, bei denen jedoch der Index 1 durch den Index 2 ersetzt ist. Im Unterschied dazu ist der Meßteilung $MT_2$ nach Figur 4 eine parallel verlaufende Referenzmarkenspur mit n identischen Referenzmarken $Rn_2$ (n=1,2,3,...) zugeordnet, zwischen denen zu ihrer Identifizierung spezifisch unterschiedliche Abstände bestehen. Zur Abtastung dieser codierten Referenzmarken $Rn_2$ ist auf der Abtastplatte $AP_2$ eine Referenzabtastteilung $RT_2$ vorgesehen, die im Strichmuster mit den Referenzmarken $Rn_2$ übereinstimmt. Derartige abstandscodierte Referenzmarken sind in der DE-PS 24 16 212 beschrieben.

Das an der Meßteilung $MT_2$ reflektierte Teilstrahlenbündel $BR_2$ durchsetzt nach der Reflexion an der Spiegelschicht $SS_2$ des Teilungsträgers $TT_2$ jeweils eine Referenzmarke $Rn_2$ und die Referenzabtastteilung $RT_2$ und fällt auf das zweite Photoelement $Pb_2$, das als Funktionssignal jeweils ein Referenzsignal erzeugt, das zum Setzen eines nicht gezeigten Zählers verwendet werden kann.

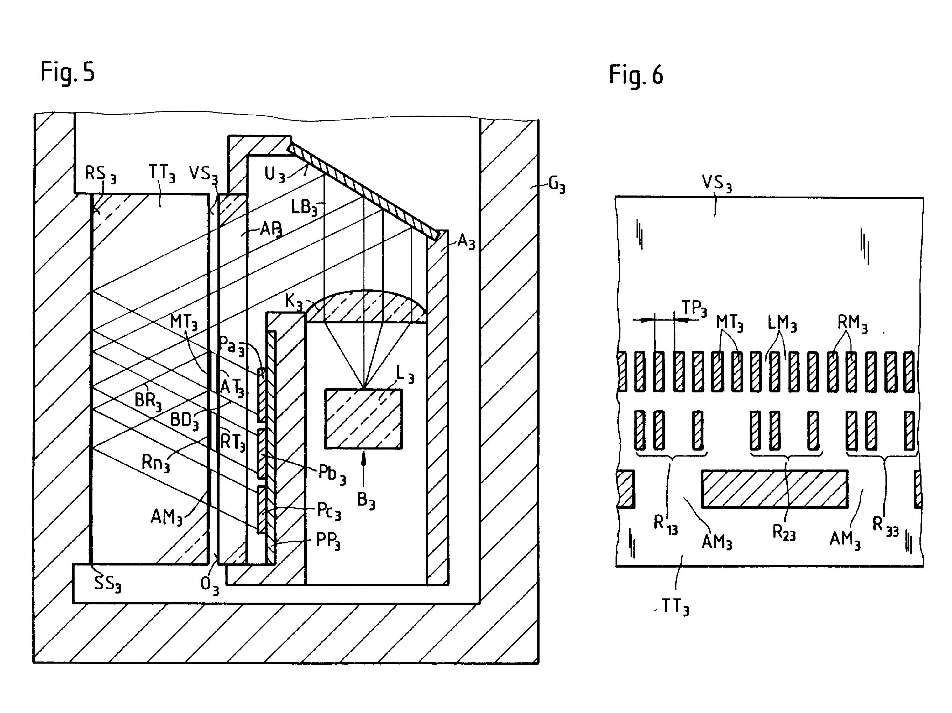

In Figur 5 ist eine dritte lichtelektrische Längenmeßeinrichtung im Querschnitt gezeigt, die im wesentlichen aus den gleichen Elementen wie die zweite lichtelektrische Längenmeßeinrichtung gemäß den Figuren 3 und 4 besteht und dementsprechend auch die gleichen Bezugszeichen aufweist, bei denen jedoch der Index 2 durch den Index 3 ersetzt ist.

Im Unterschied dazu ist neben der Referenzmarkenspur mit n identischen Referenzmarken $Rn_3$ (n=1, 2, 3, ...), zwischen denen zu ihrer Identifizierung spezifisch unterschiedliche Abstände bestehen, eine parallel verlaufende Auswahlmarkenspur mit Auswahlmarken $AM_3$ angeordnet, die speziellen Referenzmarken $Rn_3$ zugeordnet sind.

Das von der Beleuchtungseinheit $B_3$ ausgehende Lichtstrahlenbündel $LB_3$ durchsetzt einmal als durchgehendes Teilstrahlenbündel $BD_3$ die lichtdurchlässigen Streifen $LM_3$ der Meßteilung $MT_3$ und die lichtdurchlässigen Streifen der Abtastteilung $AT_3$ zur Beaufschlagung des ersten Photoelements $Pa_3$; zum anderen durchsetzt dieses Lichtstrahlenbündel $LB_3$ auch die Referenzmarken $Rn_3$ und die Referenzabtastteilung $RT_3$ zur Beaufschlagung des zweiten Photoelements $Pb_3$.

Das an der Meßteilung $MT_3$ reflektierte Teilstrahlenbündel $BR_3$ durchsetzt nach der Reflexion an der Spiegelschicht $SS_3$ des Teilungsträgers $TT_3$ jeweils eine Auswahlmarke $AM_3$ und fällt auf ein drittes Photoelement $Pc_3$, das als Funktionssignal ein Auswahlsignal zur Auswahl der zugeordneten speziellen Referenzmarke $Rn_3$ erzeugt. Es können somit in einer ersten Betriebsart alle codierten Referenzmarken $Rn_3$ aufgrund ihrer spezifisch unterschiedlichen Abstände identifiziert oder in einer zweiten Betriebsart mittels der Auswahlmarken $AM_3$ nur spezielle Referenzmarken $Rn_3$ ausgewählt werden.

**Patentansprüche**

1. Lichtelektrische Positionsmeßeinrichtung zum Messen der Relativlage zweier Objekte, bei der ein Teilungsträger (TT) mit wenigstens einer Meßteilung (MT) aus lichtdurchlässigen Streifen (LM) und aus lichtreflektierenden Streifen (RM) von einer eine Beleuchtungseinheit (B), eine Abtastplatte (AP) mit wenigstens einer Abtastteilung (AT) sowie Photoelemente (Pa, Pb) aufweisenden Abtasteinheit (A) abgetastet wird und bei der das von der Beleuchtungseinheit (B) ausgehende Lichtstrahlenbündel (LB) in wenigstens ein durch die lichtdurchlässigen Streifen (LM) durchgehendes Teilstrahlenbündel (BD) zur Beaufschlagung eines ersten Photoelements (Pa) und in wenigstens ein von den lichtreflektierenden Streifen (RM) reflektiertes Teilstrahlenbündel (BR) zur Beaufschlagung eines zweiten Photoelements (Pb) aufgespalten wird, dadurch gekennzeichnet, daß die Positionsmeßeinrichtung so ansgebildet ist, daß das durch die Meßteilung (MT) durchgehende Teilstrahlenbündel (BD) durch die Abtastteilung (AT) moduliert und das von der Meßteilung (MT) reflektierte Teilstrahlenbündel (BR) von der Abtastteilung (AT) nicht moduliert wird.

2. Meßeinrichtung nach Anspruch 1, dadurch gekennzeichnet, daß das an der Meßteilung $(MT_1)$ reflektierte Teilstrahlenbündel $(BR_1)$ nach erneuter Reflexion den transparenten Teilungsträger $(TT_1)$ außerhalb der Meßteilung $(MT_1)$ durchsetzt und ein Photoelement $(Pb_1)$ zur Erzeugung eines Gleichspannungssignals beaufschlagt.

3. Meßeinrichtung nach Anspruch 1, dadurch gekennzeichnet, daß der Meßteilung $(MT_2)$ codierte Referenzmarken $(Rn_2)$ zugeordnet sind und daß das an der Meßteilung $(MT_2)$ reflektierte Teilstrahlenbündel $(BR_2)$ nach erneuter Reflexion die codierten Referenzmarken $(Rn_2)$ durchsetzt und ein Referenzphotoelement $(Pb_2)$ zur Erzeugung eines Referenzsignals beaufschlagt.

4. Meßeinrichtung nach Anspruch 1, dadurch gekennzeichnet, daß der Meßteilung $(MT_3)$ codierte Referenzmarken $(Rn_3)$ und den codierten Referenzmarken $(Rn_3)$ Auswahlmarken $(AM_3)$ zugeordnet sind und daß das an der Meßteilung $(MT_3)$ reflektierte Teilstrahlenbündel $(BR_3)$ nach erneuter Reflexion die Auswahlmarken $(AM_3)$ durchsetzt und ein Photoelement $(Pc_3)$ zur Erzeugung eines Auswahlsignals beaufschlagt.


## Claims

1. Photoelectric position measuring apparatus for measuring the relative position of two objects, wherein a scale carrier (TT) with at least one measuring scale (MT) composed of light-transmitting bars (LM) and light-reflecting bars (RM) is scanned by a scanning unit (A) having an illuminating unit (B), a scanning plate (AP) with at least one scanning scale (AT) and also photocells (Pa, Pb) and wherein the beam of light (LB) emanating from the illuminating unit (B) is split up into at least one partial light beam (BD) passing through the light-transmitting bars (LM) to impinge on a first photocell (Pa) and into at least one partial light beam (BR) reflected by the light-reflecting bars (RM) to impinge on a second photocell (Pb), characterised in that the position measuring apparatus is so constructed that the partial light beam (BD) passing through the measuring scale (MT) is modulated by the scanning scale (AT) and the partial light beam (BB) reflected by the measuring scale (MT) is not modulated by the scanning scale (AT).

2. Measuring apparatus according to claim 1, characterised in that the partial light beam $(BR_1)$ reflected at the measuring scale $(MT_1)$ penetrates the transparent scale carrier $(TT_1)$ outside the measuring scale $(MT_1)$ after renewed reflection and impinges on a photocell $(Pb_1)$ to generate a d.c. voltage signal.

3. Measuring apparatus according to claim 1, characterised in that coded reference marks $(Rn_2)$ are associated with the measuring scale $(MT_2)$ and the partial light beam $(BR_2)$ reflected at the measuring scale $(MT_2)$ penetrates the coded reference marks $(Rn_2)$ after renewed reflection and impinges on a reference photocell $(Pb_2)$ to generate a reference signal.

4. Measuring apparatus according to claim 1, characterised in that coded reference marks $(Rn_3)$ are associated with the measuring scale $(MT_3)$ and selection marks $(AM_3)$ are associated with the coded reference marks $(Rn_3)$ and the partial light beam $(BR_3)$ reflected at the measuring scale $(MT_3)$ penetrates the selection marks $(AM_3)$ after renewed reflection and impinges or a photocell $(Pc_3)$ to generate a selection signal.


## Revendications

1. Dispositif de mesure de position photo-électrique pour la mesure de la position relative de deux objets, dans lequel un support de graduation (TT) comportant au mois une graduation de mesure (MT) formée de bandes transparentes (LM) et de bandes réfléchissantes (RM) est lu par une unité de lecture (A) comportant une unité d'éclairage (B), une plaque de lecture (AP) avec au mois une graduation de lecture (AT) et des cellules photo-électriques (Pa, Pb) et dans lequel le faisceau lumineux (LB) sortant de l'unité d'éclairage (B) est divisé en au moins un faisceau partiel (BD) qui traverse les bandes transparentes (LM) et est envoyé sur une première cellule photo-électrique (Pa) et en au moins un faisceau partiel (BR) qui est réfléchi par les bandes réfléchissantes (RM) est envoyé sur une deuxième cellule photo-électrique (Pb), caractérisé en ce que le dispositif de mesure de position est agencé de manière telle que le faisceau partiel (BD) traversant la graduation de mesure (MT) est modulé par la graduation de lecture (AT) et le faisceau partiel (BR) réfléchi par la graduation de mesure (MT) n'est pas modulé par la graduation de lecture (AT).

2. Dispositif de mesure selon la revendication 1, caractérisé en ce que le faisceau partiel $(BR_1)$ réfléchi

par la graduation de mesure ($MT_1$) traverse le support de graduation ($TT_1$) transparent en dehors de la graduation de mesure ($MT_1$) après une nouvelle réflexion et frappe une cellule photo-électrique ($Pb_1$) qui délivre un signal de tension continue.

3. Dispositif de mesure selon la revendication 1, caractérisé en ce que des repères de référence codés ($Rn_2$) sont associés à la graduation de mesure ($MT_2$) et en ce que le faisceau partiel ($BR_2$) réfléchi par la graduation de mesure ($MT_2$) traverse les repères de référence codés ($Rn_2$) après une nouvelle réflexion et frappe une cellule photo-électrique de référence ($Pb_2$) qui délivre un signal de référence.

4. Dispositif de mesure selon la revendication 1, caractérisé en ce que des repères de référence codés ($Rn_3$) sont associés à la graduation de mesure ($MT_3$) et des repères de sélection ($AM_3$) sont associés aux repères de référence codés ($Rn_3$) et en ce que le faisceau partiel ($BR_3$) réfléchi par la graduation de mesure ($MT_3$) traverse les repères de sélection ($AM_3$) après une nouvelle réflexion et frappe une cellule photo-électrique de référence ($Pc_3$) qui délivre un signal de sélection.

Fig.2

Fig.1

Fig. 4

Fig. 3

Fig. 6

Fig. 5